**Europäisches Patentamt**

(19) **European Patent Office**

**Office européen des brevets**

(11) Veröffentlichungsnummer: **0 114 287**
**B1**

(12) **EUROPÄISCHE PATENTSCHRIFT**

(45) Veröffentlichungstag der Patentschrift: 16.09.87

(51) Int. Cl.⁴: **G 01 N 30/16,** G 01 N 1/00

(21) Anmeldenummer: **83112437.5**

(22) Anmeldetag: **10.12.83**

(54) **Stechkanülenanordnung zum Einleiten eines Trägergases in ein Probengefäss.**

(30) Priorität: **22.01.83 DE 3302158**

(43) Veröffentlichungstag der Anmeldung:
**01.08.84 Patentblatt 84/31**

(45) Bekanntmachung des Hinweises auf die Patenterteilung:
**16.09.87 Patentblatt 87/38**

(84) Benannte Vertragsstaaten:
**DE GB IT**

(56) Entgegenhaltungen:
**EP - A - 0 071 091**
**WO - A - 81/03545**
**DE - A - 2 815 023**
**DE - B - 1 284 660**

(73) Patentinhaber: **Bodenseewerk Perkin-Elmer & Co. GmbH, Alte Nussdorfer Strasse 15 Postfach 1120, D-7770 Überlingen/Bodensee (DE)**

(72) Erfinder: **Chiosta, Wolfgang, Jodokstrasse 16, D-7770 Überlingen (DE)**
Erfinder: **Riegger, Wolfgang, Obere Kapelläcker 12, D-7777 Salem (DE)**

(74) Vertreter: **Weisse, Jürgen, Dipl.-Phys. et al, Patentanwälte Dipl.-Phys. Jürgen Weisse Dipl.-Chem. Dr. Rudolf Wolgast Bökenbusch 41 Postfach 11 03 86, D-5620 Velbert 11 Langenberg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Stechkanülenanordnung zum Einleiten eines Trägergases in ein durch eine selbstdichtende Membran abgeschlossenes Probengefäss, insbesondere für einen nach der Dampfraummethode arbeitenden Probengeber in der Gaschromatographie, enthaltend

a) ein gerätefest gehaltenes Gehäuse, das eine Kammer bildet, welche mit einem Anschluss für eine absperrbare Trägergasleitung und eine Trennsäule in Verbindung steht,

b) eine Stechkanüle mit einer Spitze, die

$b_1$) in dem Gehäuse in Dichtmitteln abdichtend zwischen einer Ruhestellung und einer Arbeitsstellung verschiebbar geführt ist,

$b_2$) eine erste seitliche Öffnung in der Nähe der Spitze und

$b_3$) in Abstand von der ersten seitlichen Öffnung eine zweite seitliche Öffnung aufweist, die in der Arbeitsstellung der Stechkanüle mit der Kammer in Verbindung steht, so dass eine Trägergasströmung durch die zweite Öffnung in die Stechkanüle und aus der ersten Öffnung heraus stattfindet.

In einem durch eine Membran abgeschlossenen Probengefäss stellt sich im Dampfraum oberhalb einer Probenflüssigkeit ein Gleichgewichtszustand ein, bei welchem die Partialdrücke der Probenbestandteile im Dampfraum eindeutig von der Zusammensetzung der Probe abhängen. Bei einem nach der Dampfraummethode arbeitenden Probengeber wird die auf die Trennsäule eines Gaschromatographen gegebene Probe diesem Dampfraum entnommen. Zu diesem Zweck wird eine Stechkanüle durch die selbstdichtende Membran hindurchgestochen. Die Stechkanüle ist mit dem Einlass eines Dosierkopfes des Gaschromatographen verbunden. Der Dosierkopf steht ausserdem mit einer Trägergasleitung in Verbindung. In dieser Trägergasleitung ist ein Absperrventil angeordnet. Über die Stechkanüle tritt zunächst bei geöffnetem Absperrventil Trägergas in den Dampfraum des abgeschlossenen Probengefässes ein, so dass sich in dem Probengefäss ein Trägergasdruck aufbaut. An den Partialdrücken der Probenbestandteile im Dampfraum ändert dies nichts. Wenn anschliessend das Absperrventil geschlossen wird, bricht der Trägergasdruck im Dosierkopf zusammen. Durch den Überdruck im Probengefäss wird dann eine Gasprobe aus dem Dampfraum in den Dosierkopf und den Eingang der Trennsäule gedrückt. Nach einer definierten Zeit wird das Absperrventil wieder geöffnet, wodurch die Dosierung beendet und die Probe in die Trennsäule des Gaschromatographen transportiert wird (DE-PS 1 208 523).

Um zu verhindern, dass nach dem Herausziehen der Stechkanüle aus dem Probengefäss das Trägergas weiter ungedrosselt aus der Stechkanüle ausströmen kann, ist es bekannt (DE-PS 1 284 660), die Stechkanüle in einem Kolben anzuordnen, der in einen Zylinder abdichtend beweglich ist. Der Zylinder weist einen drosselnden Auslass auf und ist an seiner dem Probengefäss zugewandten Stirnseite durch eine weitere selbstdichtende Membran abgeschlossen. Der Zylinder steht unter dem Einfluss einer Druckfeder, welche sich an dem Kolben abstützt und den Zylinder über die Stechkanüle zu schieben trachtet. Im Ruhezustand ist die Stechkanüle mit ihrer in der Nähe des angespitzten Endes befindlichen Öffnung im Inneren des Zylinders.

Bei dieser bekannten Anordnung ist die Stechkanüle feststehend angeordnet und ständig mit dem Dosierkopf und der Trägergasleitung verbunden. Der Zylinder ist gegenüber dieser feststehenden Stechkanüle längsbeweglich geführt. Ein Probengefäss wird mit seiner selbstdichtenden Membran an die durch die weitere selbstdichtende Membran abgeschlossene Stirnseite des Zylinders angesetzt und nach oben geschoben, wobei der Zylinder zurückgedrückt wird und die Stechkanüle durch die beiden selbstdichtenden Membranen hindurch in das Probengefäss eindringt. In der Ruhestellung fliesst ein Spülstrom durch die Stechkanüle, dessen Stärke durch die Drosselung des Auslasses aus dem Zylinder bestimmt ist. Dieser Spülstrom stellt sicher, dass keine Dämpfe in der Stechkanüle von einer Probe zur nächsten verschleppt werden können.

Durch die DE-OS 2 815 023 ist eine Stechkanülenanordnung der eingangs genannten Art bekannt, bei welcher das Trägergas in ein gerätefest gehaltenes Gehäuse eingeleitet wird und eine Stechkanüle in dem Gehäuse in Dichtmitteln abdichtend zwischen einer Ruhestellung und einer Arbeitsstellung verschiebbar geführt ist. Die Stechkanüle besitzt eine Spitze. In der Nähe dieser Spitze ist eine erste seitliche Öffnung vorgesehen. Im Abstand von der ersten seitlichen Öffnung weist die Stechkanüle eine zweite Öffnung auf. In der Arbeitsstellung der Stechkanüle steht die zweite Öffnung mit der in dem Gehäuse gebildeten Kammer in Verbindung, so dass eine Trägergasströmung durch die zweite Öffnung in die Stechkanüle und aus der ersten Öffnung heraus stattfindet. Die Stechkanüle ist beim Andrücken des Probengefässes gegen die Wirkung einer Rückstellfeder zwischen einer Ruhestellung und einer Betriebsstellung längsverschiebbar geführt. In der Ruhestellung befindet sich die zweite Öffnung der Stechkanüle in einer von einem gedrosselten Spülstrom beaufschlagten Kammer. Dieser Spülstrom fliesst dann durch die zweite seitliche Öffnung, die Stechkanüle und tritt an der ersten seitlichen Öffnung in die Atmosphäre aus. Beim Andrücken des Probengefässes wird die Stechkanüle von dem Probengefäss direkt oder über einen Federmechanismus in die Arbeitsstellung verschoben.

Die bekannten Stechkanülenanordnungen, auch die nach der DE-OS 2 815 023, erfordern ein Anheben des Probengefässes und Andrücken des Probengefässes gegen die Stechkanüle. Das erfordert einen erheblichen konstruktiven Aufwand, insbesondere wenn die Probengefässe in einem thermostatisierten Drehtisch (DE-PS 1 297 904 oder DE-PS 2 818 251) angeordnet sind.

Der Erfindung liegt die Aufgabe zugrunde, eine Stechkanülenanordnung der eingangs definierten Art so auszubilden, dass ein Andrücken der Probengefässe gegen die Stechkanülenanordnung nicht erforderlich ist.

Erfindungsgemäss wird diese Aufgabe – ausgehend von der eingangs definierten Anordnung – dadurch gelöst, dass

c) die Stechkanüle durch einen Stellmotor, zwischen der Ruhe- und der Arbeitsstellung relativ zu dem stillstehenden Gehäuse verstellbar ist,

d) das Gehäuse einen die Kammer bildenden Längskanal aufweist, dessen Wandung die Stechkanüle unter Freilassung eines engen Ringspaltes umgibt, mit einem der Spitze der Stechkanüle benachbarten ersten Ende und einem von der Spitze entfernten zweiten Ende,

e) die Dichtmittel

$e_1$) ein Paar von Dichtungen aufweisen, die im Bereich des ersten Endes des Längskanals in axialem Abstand voneinander vorgesehen sind und dicht an der Stechkanüle anliegen, und

$e_2$) eine Dichtung aufweisen, die im Bereich des zweiten Endes des Längskanals vorgesehen ist und dicht an der Stechkanüle anliegt,

f) der Anschluss für die Trägergasleitung an dem ersten Ende axial einwärts von den Dichtungen mündet und

g) die Stechkanüle durch den Stellmotor gesteuert

$g_1$) in die Ruhestellung verfahrbar ist, in welcher die erste seitliche Öffnung an dem ersten Ende zwischen dem Paar von Dichtungen sitzt, und

$g_2$) in die Arbeitsstellung verfahrbar ist, in welcher die Stechkanüle mit ihrer Spitze und der sich seitlichen Öffnung an dem ersten Ende aus dem Gehäuse herausragt und die zweite seitliche Öffnung neben dem Anschluss für die Trägergasleitung angeordnet ist.

Bei der erfindungsgemässen Anordnung wird die Stechkanüle durch einen Stellmotor bewegt, so dass sie in der Arbeitsstellung in das in seiner Ebene verbleibende Probengefäss eingestochen werden kann. Das macht es jedoch erforderlich, das Trägergas so in die bewegliche Stechkanüle einzuleiten, dass Totvolumina, die zu einer Probenverschleppung führen könnten, möglichst gering gehalten werden. Das wird durch die Ausbildung des Gehäuses mit einem engen Längskanal und durch die Ausbildung der Dichtmittel erreicht.

Ausgestaltungen der Erfindung sind Gegenstand der abhängigen Ansprüche.

Ein Ausführungsbeispiel der Erfindung ist nachstehend unter Bezugnahme auf die zugehörigen Zeichnungen näher erläutert:

Fig. 1 zeigt eine Seitenansicht der Stechkanülenanordnung, teilweise im Schnitt.

Fig. 2 zeigt in vergrössertem Massstab eine Seitenansicht – teilweise im Schnitt – einer Stechkanüle und ihrer Halterung am Hubglied eines Stellmotors.

Fig. 3 zeigt ein Schaltschema mit der Stechkanülenanordnung, der Trennsäule und dem Trägergaskreis.

Fig. 4 ist eine schematische Darstellung und zeigt die verschiedenen Stellungen der Stechkanüle, in welche diese durch den Stellmotor verfahrbar ist.

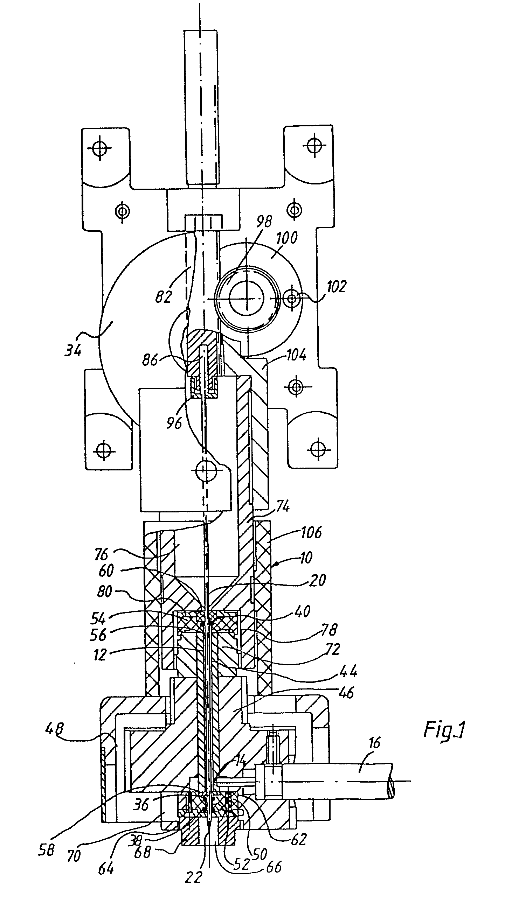

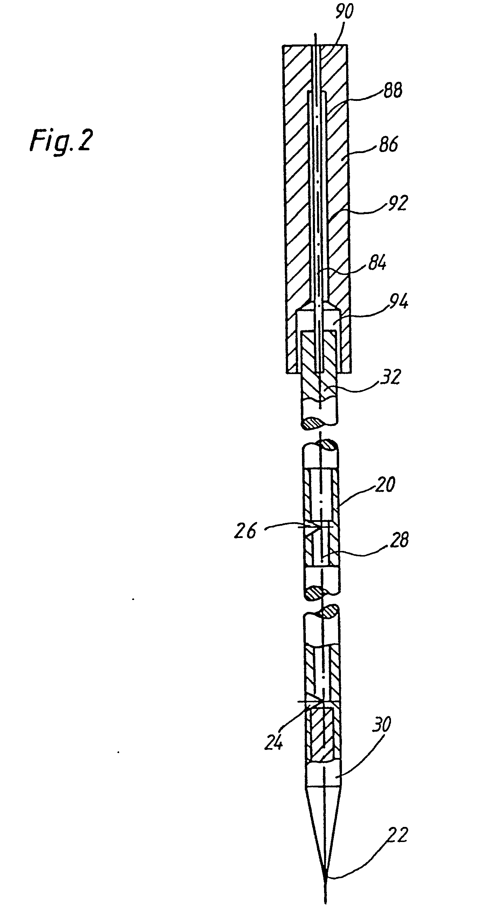

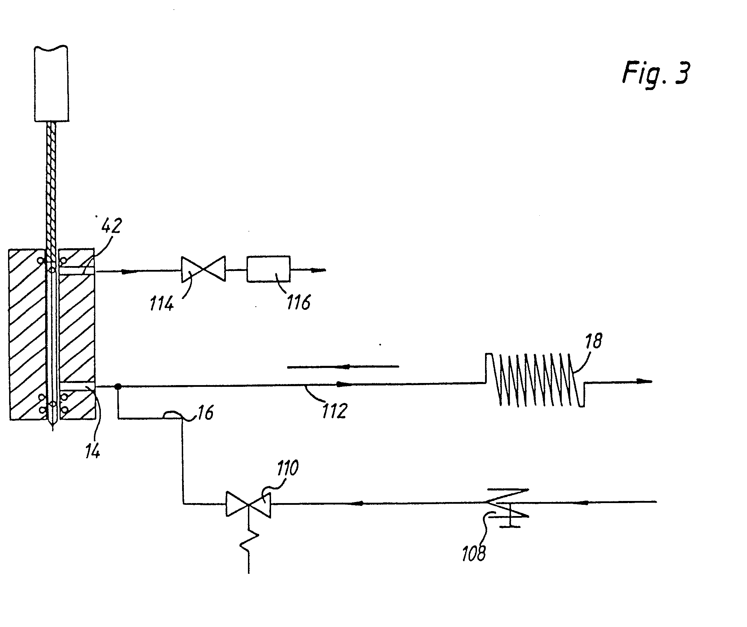

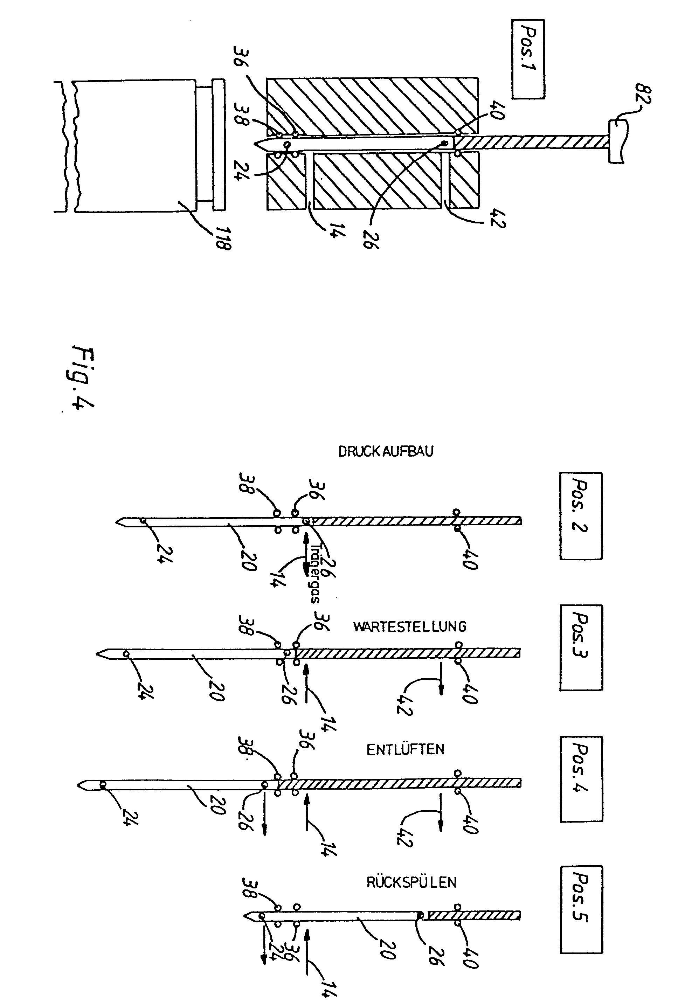

Die Stechkanülenanordnung nach Fig. 1 enthält ein gerätefestgehaltenes Gehäuse 10, das eine Kammer 12 bildet. Die Kammer 12 steht mit einem Anschluss 14 für eine absperrbare Trägergasleitung 16 und eine Trennsäule 18 (Fig. 3) in Verbindung. Eine Stechkanüle 20 mit einer Spitze 22 ist in dem Gehäuse 10 in Dichtmitteln zwischen einer Ruhestellung und einer Arbeitsstellung verschiebbar geführt. Sie weist eine erste seitliche Öffnung 24 (Fig. 2) in der Nähe der Spitze 22 und eine zweite seitliche Öffnung 26 im Abstand von der ersten seitlichen Öffnung 24 auf. Die beiden Öffnungen sind durch einen in Längsrichtung laufenden Kanal 28 der Stechkanüle miteinander verbunden. An dem in Fig. 2 unteren Ende ist der Kanal 28 durch ein die Spitze 22 bildendes Endstück 30 abgeschlossen. Oberhalb der zweiten Öffnung 26 ist der Kanal 28 durch ein massives oberes Endstück 32 abgeschlossen. In der Arbeitsstellung, die in Fig. 4 als «Position 2» bezeichnet ist, steht die zweite seitliche Öffnung 26 mit der Kammer 12 in Verbindung, so dass, wie noch erläutert werden wird, eine Trägergasströmung durch die zweite Öffnung 26 in die Stechkanüle 20 und aus der ersten Öffnung 24 heraus stattfindet.

Die Stechkanüle ist durch einen Stellmotor 34 zwischen der in Fig. 1 und 3 dargestellten Ruhestellung (Positon 1 in Fig. 4) und der Arbeitsstellung (Position 2 in Fig. 4) relativ zu dem stillstehenden Gehäuse verstellbar. Das Gehäuse 10 weist ein die besagte Kammer bildenden Längskanal 12 auf, dessen Wandung die Stechkanüle 20 unter Freilassung eines engen Ringspalts umgibt. Der Längskanal besitzt ein der Spitze 22 der Stechkanüle 20 benachbartes, in Fig. 1 unteres, erstes Ende und ein von der Spitze 22 entferntes, in Fig. 1 oberes, zweites Ende. Die Dichtmittel weisen ein Paar von Dichtungen 36 und 38 auf, die im Bereich des ersten Endes des Längskanals 12 in axialem Abstand voneinander vorgesehen sind und dicht an der Stechkanüle 20 anliegen. Im Bereich des zweiten Endes des Längskanals 12 ist eine Dichtung 40 vorgesehen, die dicht an der Stechkanüle 20 anliegt. Der Anschluss 14 für die Trägergasleitung 16 mündet an dem ersten Ende axial einwärts von den Dichtungen 36 und 38. Die Stechkanüle ist durch den Stellmotor 34 in die Ruhestellung (Position 1) verfahrbar, in welcher die erste seitliche Öffnung 24 an dem ersten Ende zwischen dem Paar von Dichtungen 36 und 38 sitzt, und in die Arbeitsstellung (Position 2) in welchem die Stechkanüle 20 mit ihrer Spitze und der ersten seitlichen Öffnung 24 aus dem Gehäuse 10 herausragt und die zweite seitliche Öffnung 26 neben dem Anschluss 14 für die Trägergasleitung 16 angeordnet ist. Axial einwärts von der Dichtung 40 an dem zweiten Ende ist ein mit der Atmosphäre verbundener Anschluss 42 vorgesehen.

Bei der dargestellten bevorzugten Ausführungsform wird der Längskanal 12 von einer Hülse 44 gebildet. Die Hülse sitzt in einem Dosierkopf 46, der mit einer aufvulkanisierten, siliconisolierten Heizung 48 versehen ist. Mit Hilfe dieser Heizung kann die Temperatur des Dosierkopfes 46 zwischen 30°C und 190°C geregelt werden. Die Dichtmittel, durch welche die Kammer 12 abgedichtet wird, enthalten ein erstes Kopfstück 50, das an dem ersten, in Fig. 1 unteren Ende der Hülse 44 an deren Stirnseite anliegt. Das Kopfstück 50 weist einen mit dem Längskanal der Hülse 44 fluchtenden Durchbruch 52 auf. In dem Kopfstück 50 ist das im Bereich des ersten Endes der Hülse 44 vorgesehene Paar von Dichtungen 36, 38 gehalten, das von O-Ringen gebildet ist, die in Ringnuten des Kopfstücks 50 sitzen. Die O-Ringe bestehen bei der bevorzugten Ausführungsform aus Fluorsilicon und sind mit Graphitpulver zur Verminderung der Reibung eingerieben. Die Dichtmittel enthalten weiterhin ein zweites Kopfstück 54 aus Kunststoff, das am zweiten, in Fig. 1 oberen Ende der Hülse 44 an deren Stirnseite anliegt und ebenfalls einen mit dem Längskanal der Hülse 44 fluchtenden Durchbruch 56 aufweist. In dem zweiten Kopfstück ist die im Bereich des zweiten Endes der Hülse 44 vorgesehene Dichtung 40 gehalten. Auch diese Dichtung 40 wird von einem O-Ring gebildet, der in einer Ringnut in dem Durchbruch 56 sitzt, aus Fluorsilicon besteht und mit Graphitpulver eingerieben ist. In den Kopfstücken 50 und 54 sind fluchtend mit den Durchbrüchen 52 und 56 Kunststoffringe 58 bzw. 60 gehalten. Die Stechkanüle 20 ist in diesen Kunststoffringen 58, 60 längsbeweglich geführt. Auf diese Weise werden die Funktionen der Führung und der axialen Abdichtung voneinander getrennt. Wenigstens einer der Kunststoffringe – bei dem bevorzugten Ausführungsbeispiel der Kunststoffring 58 – besteht aus chemisch hochbeständigem Kunststoff. Er ist auf der der Kammer 12 zugewandten Seite der zugehörigen O-Ringe 36, 38 angeordnet. Auf diese Weise sind die O-Ringe weitgehend gegen die Einflüsse aggressiver Bestandteile im Probengas geschützt.

Das Kopfstück 50 am ersten Ende der Hülse 44 sitzt in einer Ausnehmung 62 des Dosierkopfes 46, so dass es am Grund der Ausnehmung 62 und an der damit im wesentlichen fluchtenden Stirnfläche der Hülse 44 abdichtend anliegt. Die Ausnehmung 62 weist ein Innengewinde 64 auf, in welches eine mit einem zentralen, mit dem Längskanal der Hülse 44 fluchtenden Durchbruch 66 versehene Mutter 68 eingeschraubt ist. Die Mutter 68 drückt das Kopfstück 50 gegen den Grund der Ausnehmung 62 und die Stirnseite der Hülse 44. Der Dosierkopf 46 weist seitlich von dem Kopfstück 50 einen Querschlitz 70 auf, der die das Kopfstück 50 aufnehmende Ausnehmung 62 anschneidet. Die Stechkanüle 20 ist durch den Stellmotor 34 in eine Stellung zurückfahrbar, in welcher die Spitze 22 ganz innerhalb der Hülse 44 befindet. Das Kopfstück 50 ist dann nach Lösen der Mutter 68 seitlich durch den Schlitz 70 herausziehbar, oder es ist ein Kopfstück 50 durch den Schlitz 70 hindurch einsetzbar. Das gestattet ein leichtes Auswechseln des Kopfstücks 50, das im Betrieb einem Verschleiss unterliegt und daher gelegentlich ersetzt werden muss. An dem Dosierkopf 46 ist ums zweite Ende der Hülse 44 herum und koaxial zu dieser ein mit einem Aussengewinde versehener Ansatz 72 vorgesehen. Auf diesen Ansatz ist ein Körper 74 aufgeschraubt, der einen Längskanal 76 für die Stechkanüle 20 und eine mit Innengewinde versehene zylindrische Ausnehmung 78 aufweist, mit welcher er über den Ansatz 72 greift, wobei das Innengewinde des Körpers 74 auf das Aussengewinde des Ansatzes 72 aufgeschraubt ist. Das an dem zweiten Ende der Hülse 44 sitzende Kopfstück 54 ist zwischen dem Grund der Ausnehmung 78 dieses Körpers 74 und den Stirnflächen der Hülse 44 und des Ansatzes 72 gehalten und wird gegen die letzteren angedrückt. Zwischen dem Grund der Ausnehmung 78 und dem Kopfstück 72 ist ein Federring, z.B. eine Tellerfeder 80 angeordnet. Diese Tellerfeder gleicht Veränderungen in den Abmessungen des Kopfstücks 54 aus, die durch Fliessen des Kunststoffs hervorgerufen werden.

Die Stechkanüle 20 ist an ihrem der Spitze 22 abgewandten Ende mit einem durch den Stellmotor 34 bewegbaren Hubglied 82 über ein Federzwischenglied 84 (Fig. 2) verbunden, das einen Ausgleich von Toleranzen zwischen Führung und Antrieb der Stechkanüle 20 gestattet. Wie aus Fig. 2 ersichtlich ist, ist ein länglicher, zylindrischer Spannkopf 86 vorgesehen, der eine gestufte Längsbohrung aufweist. In einem engsten Teil 90 dieser Längsbohrung an einem Ende des Spannkopfes 86 ist das Federzwischenglied 84 eingespannt. Das Federzwischenglied erstreckt sich dann durch einen mittleren Abschnitt 92 der Längsbohrung, der einen grösseren Durchmesser besitzt und daher eine seitliche Bewegung des Federzwischenglieds 84 gestattet. An seinem freien Ende ist das Federzwischenglied 84 mit dem massiven Abschnitt 32 an dem der Spitze 22 abgewandten Ende der Stechkanüle 20 verbunden. Ein erweiterter dritter Abschnitt 94 der Längsbohrung 88 greift über dieses Ende der Stechkanüle 20. Der Spannkopf 86 sitz in einer Ausnehmung an der Stirnfläche des Hubglieds 82 und ist durch eine Überwurfmutter 96 gehalten. Das Hubglied 82, mit dem die Stechkanüle 20 verbunden ist, ist eine Zahnstange, die fluchtend mit dem Längskanal der Hülse 44 längsbeweglich geführt ist. Die Zahnstange steht mit einem Ritzel 98 in Eingriff, das von dem Stellmotor 34 antreibbar ist. Zur Überwachung und Steuerung des Stellmotors ist mit dem Ritzel 98 eine Kodierscheibe 100 verbunden, die durch einen Abtastkopf z.B.

eine Lichtschranke 102 abtastbar ist. Bei dem Ausführungsbeispiel ist an dem Motor 34 ein topfförmiger Gehäuseansatz 104 vorgesehen, der in die Führung der Zahnstange 82 übergeht und der über den Körper 74 greift. Auf diese Weise ist eine gute Ausrichtung der Zahnstange 82 und der Hülse 44 sowie der Stechkanüle 20 gewährleistet. Toleranzen werden von dem Federzwischenglied 84 aufgenommen. Der Körper 74 ist von einem Isoliermantel 106 umgeben.

Wie aus Fig. 3 ersichtlich ist, ist der Anschluss 14 einmal mit der Trägergasleitung verbunden, die einen Druckregler 108 und ein Magnetventil 110 enthält. Zum anderen ist an den Anschluss 14 die Trennsäule 18 über eine Leitung 112 angeschlossen. Der Anschluss 42 ist über ein Magnetventil 114 und eine Strömungswiderstand 116 mit der Atmosphäre verbunden.

Wie aus Fig. 4 ersichtlich ist, kann die Stechkanüle 20 durch den Stellmotor gesteuert in eine dritte Stellung (Wartestellung) verfahren werden, die in Fig. 4 mit «Position 3» bezeichnet ist. In dieser dritten Stellung befindet sich die zweite seitliche Öffnung 26 zwischen den beiden am ersten Ende des Längskanals 12 vorgesehenen Dichtungen 36 und 38. Die Stechkanüle ist durch den Stellmotor 34 weiterhin in eine vierte Stellung (Entlüftungsstellung) verfahrbar, die in Fig. 4 mit «Position 4» bezeichnet ist. In der vierten Stellung befindet sich die zweite seitliche Öffnung axial auswärts von den beiden am ersten Ende des Längskanals vorgesehenen Dichtungen 36, 38 und steht mit der Atmosphäre in Verbindung. Wenn sich, wie in Fig. 4 angedeutet ist, oberhalb der Stechkanüle 20 ein Probengefäss 118 befindet, dann steht in der dritten Stellung der Längskanal 28 der Stechkanüle 20 über die erste seitliche Öffnung 24 mit dem Inneren des Probengefässes 118 in Verbindung, während die zweite seitliche Öffnung 26 durch die beiden Dichtungen 36 und 38 dicht abgeschlossen ist. Es kann daher kein Gas aus dem Probengefäss 118 entweichen. Der Trägergasstrom fliesst als Spülstrom vom Anschluss 14 über die Kammer 12 zum Anschluss 42 und gedrosselt in die Atmosphäre ab.

In der vierten Stellung der Stechkanüle steht die zweite seitliche Öffnung 26 mit der Atmosphäre in Verbindung. Es kann jetzt Probengas in die Atmosphäre entweichen, so dass in dem Probengefäss 118 ein Druckausgleich stattfindet. Dies gestattet die Methode der «Gasextraktion», bei welcher mehrere Proben entnommen und zwischenzeitlich das Probengefäss jeweils entlüftet wird.

Die Stechkanüle 20 ist durch den Stellmotor 34 gesteuert in eine fünfte Stellung (Rückspülstellung) verfahrbar, die in Fig. 4 als «Position 5» bezeichnet ist. In dieser fünften Stellung befindet sich die erste seitliche Öffnung 24 axial dicht auswärts von den beiden am ersten Ende des Längskanals 12 vorgesehenen Dichtungen 36, 38 und steht mit der Atmosphäre in Verbindung. Die zweite seitliche Öffnung 26 ist zwischen den beiden am ersten Ende des Längskanals vorgesehenen Dichtungen 36, 38 einerseits und der Dichtung 40 am anderen Ende des Längskanals andererseits angeordnet und steht so mit der zwischen den Dichtungen gebildeten Kammer 12 in Verbindung. Es kann dann im Rückspülbetrieb in bekannter Weise bei Umkehr der Strömungsrichtung durch die Trennsäule Trägergas aus der Trennsäule über den Eingang der Trennsäule in die Atmosphäre geleitet werden, wobei bestimmte schwerflüchtige Komponenten der Probe aus der Trennsäule zurückgespült werden.

Bei diesen Betriebsweisen wirkt die Stechkanüle 20 in Verbindung mit den Dichtungen 36, 38 und 40 zugleich als Schieberventil.

## Patentansprüche

1. Stechkanülenanordnung zum Einleiten eines Trägergases in ein durch eine selbstdichtende Membran abgeschlossenes Probengefäss (118), insbesondere für einen nach der Dampfraummethode arbeitenden Probengeber in der Gaschromatographie, enthaltend

a) ein gerätefest gehaltenes Gehäuse (10), das eine Kammer (12) bildet, welche mit einem Anschluss (14) für eine absperrbare Trägergasleitung (16) und eine Trennsäule (18) in Verbindung steht,

b) eine Stechkanüle (20) mit einer Spitze (22), die

b$_1$) in dem Gehäuse (10) in Dichtmitteln (36, 38, 40) abdichtend zwischen einer Ruhestellung und einer Arbeitsstellung verschiebbar geführt ist,

b$_2$) eine erste seitliche Öffnung (24) in der Nähe der Spitze (22) und

b$_3$) in Abstand von der ersten seitlichen Öffnung (24) eine zweite seitliche Öffnung (26) aufweist, die in der Arbeitsstellung der Stechkanüle (20) mit der Kammer (12) in Verbindung steht, so dass eine Trägergasströmung durch die zweite Öffnung (26) in die Stechkanüle (20) und aus der ersten Öffnung (24) heraus stattfindet, dadurch gekennzeichnet, dass

c) die Stechkanüle (20) durch einen Stellmotor (34), zwischen der Ruhe- und Arbeitsstellung relativ zu dem stillstehenden Gehäuse (10) verstellbar ist,

d) das Gehäuse (10) einen die Kammer (12) bildenden Längskanal aufweist, dessen Wandung die Stechkanüle (20) unter Freilassung eines engen Ringspaltes umgibt, mit einem der Spitze (22) der Stechkanüle (20) benachbarten ersten Ende und einem von der Spitze (22) entfernten zweiten Ende,

e) die Dichtmittel

e$_1$) ein Paar von Dichtungen (36, 38) aufweisen, die im Bereich des ersten Endes des Längskanals in axialem Abstand voneinander vorgesehen sind und dicht an der Stechkanüle (20) anliegen, und

e$_2$) eine Dichtung (40) aufweisen, die im Bereich des zweiten Endes des Längskanals vorgesehen ist und dicht an der Stechkanüle (20) anliegt,

f) der Anschluss (14) für die Trägergasleitung (16) an dem ersten Ende axial einwärts von den Dichtungen (36, 38) mündet und

g) die Stechkanüle (20) durch den Stellmotor (34) gesteuert

g₁) in die Ruhestellung verfahrbar ist, in welcher die erste seitliche Öffnung (24) an dem ersten Ende zwischen dem Paar von Dichtungen (36, 38) sitzt, und

g₂) in die Arbeitsstellung verfahrbar ist, in welcher die Stechkanüle (20) mit ihrer Spitze (22) und der ersten seitlichen Öffnung (24) an dem ersten Ende aus dem Gehäuse (10) herausragt und die zweite seitliche Öffnung (26) neben dem Anschluss (14) für die Trägergasleitung (16) angeordnet ist.

2. Stechkanülenanordnung nach Anspruch 1, dadurch gekennzeichnet, dass

h) axial einwärts von der Dichtung (40) an dem zweiten Ende ein mit der Atmosphäre verbindbarer Anschluss (42) vorgesehen ist.

3. Stechkanülenanordnung nach Anspruch 1 oder 2, dadurch gekennzeichnet, dass die Stechkanüle (20) durch den Stellmotor (34) gesteuert

a) in eine dritte Stellung (Wartestellung) verfahrbar ist, in welcher die zweite seitliche Öffnung (26) sich zwischen den beiden am ersten Ende des Längskanals vorgesehenen Dichtungen (36, 38) befindet und

b) in eine vierte Stellung (Entlüftungsstellung) verfahrbar ist, in welcher die zweite seitliche Öffnung (26) sich axial auswärts von den beiden am ersten Ende des Längskanals vorgesehenen Dichtungen (36, 38) befindet und mit der Atmosphäre in Verbindung steht.

4. Stechkanülenanordnung nach einem der vorhergehenden Ansprüche, dadurch gekennzeichnet, dass die Stechkanüle (20) durch den Stellmotor (34) gesteuert in eine fünfte Stellung (Rückspülstellung) verfahrbar ist, in welcher die erste seitliche Öffnung (24) sich axial dicht auswärts von den beiden am ersten Ende des Längskanals vorgesehenen Dichtungen (36, 38) befindet und mit der Atmosphäre in Verbindung steht und die zweite seitliche Öffnung (26) zwischen den beiden am ersten Ende des Längskanals vorgesehenen Dichtungen (36, 38) einerseits und der Dichtung (40) am anderen Ende des Längskanals andererseits angeordnet ist und mit der Kammer (12) in Verbindung steht.

5. Stechkanülenanordnung nach einem der vorhergehenden Ansprüche, dadurch gekennzeichnet, dass der Längskanal von einer Hülse (44) gebildet ist.

6. Stechkanülenanordnung nach Anspruch 5, dadurch gekennzeichnet, dass die Dichtmittel

a) ein erstes Kopfstück (50) aus Kunststoff enthalten, das am ersten Ende der Hülse (44) an deren Stirnseite anliegt, das einen mit dem Längskanal der Hülse (44) fluchtenden Durchbruch (52) aufweist und in dem das im Bereich des ersten Endes der Hülse (44) vorgesehene Paar von Dichtungen (36, 38) gehalten ist, und

b) ein zweites Kopfstück (54) aus Kunststoff enthalten, das an dem zweiten Ende der Hülse (44) an deren Stirnseite anliegt, das einen mit dem Längskanal der Hülse (44) fluchtenden Durchbruch (56) aufweist und in dem die im Bereich des zweiten Endes der Hülse (44) vorgesehende Dichtung (40) gehalten ist.

7. Stechkanülenanordnung nach Anspruch 6, dadurch gekennzeichnet, dass die Dichtungen (36, 38, 40) von O-Ringen gebildet sind, die in Ringnuten in den Durchbrüchen (52, 56) der Kopfstücke (50, 54) sitzen.

8. Stechkanülenanordnung nach Anspruch 7, dadurch gekennzeichnet, dass die O-Ringe (36, 38, 40) aus Fluorsilicon bestehen und mit Graphitpulver zur Verminderung der Reibung eingerieben sind.

9. Stechkanülenanordnung nach Anspruch 7 oder 8, dadurch gekennzeichnet, dass

a) in den Kopfstücken (50, 54) Kunststoffringe (58, 60) fluchtend mit den Durchbrüchen (52, 56) gehalten sind und

b) die Stechkanüle (20) in diesen Kunststoffringen (58, 60) längsbeweglich geführt ist.

10. Stechkanülenanordnung nach Anspruch 9, dadurch gekennzeichnet, dass wenigstens einer der Kunststoffringe (58)

a) aus chemisch hochbeständigem Kunststoff besteht und

b) auf der der Kammer (12) zugewandten Seite der zugehörigen O-Ringe (36, 38) angeordnet ist.

11. Stechkanülenanordnung nach einem der Ansprüche 5 bis 10, dadurch gekennzeichnet, dass

a) die Hülse (44) in einem beheizten Dosierkopf (46) sitzt,

b) das Kopfstück (50) am ersten Ende der Hülse (44) in einer Ausnehmung (62) des Dosierkopfes (46) sitzt, so dass es am Grund der Ausnehmung (62) und an der damit im wesentlichen fluchtenden Stirnfläche der Hülse (44) abdichtend anliegt und

c) die Ausnehmung (62) ein Innengewinde (64) aufweist, in welches eine mit einem zentralen, mit dem Längskanal der Hülse (44) fluchtende Durchbruch (66) versehene Mutter (68) eingeschraubt ist, die das Kopfstück (50) gegen den Grund der Ausnehmung (62) und die Stirnseite der Hülse (44) drückt.

12. Stechkanülenanordnung nach Anspruch 11, dadurch gekennzeichnet, dass

a) der Dosierkopf (46) seitlich von dem Kopfstück (50) einen Querschlitz (70) aufweist, der die das Kopfstück (50) aufnehmende Ausnehmung (62) anschneidet, und

b) die Stechkanüle (20) durch den Stellmotor (34) gesteuert in eine Stellung zurückfahrbar ist, in welcher sich die Spitze (22) der Stechkanüle (20) ganz innerhalb der Hülse (44) befindet, so dass das Kopfstück (50) nach Lösen der Mutter (68) seitlich durch den Schlitz (70) herausziehbar oder ein Kopfstück (50) durch den Schlitz (70) hindurch einsetzbar ist.

13. Stechkanülenanordnung nach einem der Ansprüche 11 oder 12, dadurch gekennzeichnet, dass

a) an dem Dosierkopf (46) um das zweite Ende der Hülse (44) herum und koaxial zu dieser ein mit einem Aussengewinde versehener Ansatz (72) vorgesehen ist,

b) auf diesen Ansatz (72) ein Körper (74) aufgeschraubt ist, der

b₁) einen Längskanal (76) für die Stechkanüle (20) und

b₂) eine mit Innengewinde versehene, zylindrische Ausnehmung (78) aufweist, mit welcher er über den Ansatz (72) greift, wobei das Innengewinde des Körpers (74) auf das Aussengewinde des Ansatzes (72) aufgeschraubt ist, und

c) das an dem zweiten Ende der Hülse (44) sitzende Kopfstück (54) zwischen dem Grund der Ausnehmung (78) dieses Körpers (74) und den Stirnflächen der Hülse (44) und des Ansatzes (72) gehalten ist und gegen die letzteren angedrückt wird.

14. Stechkanülenanordnung nach Anspruch 13, dadurch gekennzeichnet, dass zwischen den Grund der Ausnehmung (78) und dem Kopfstück (54) ein Federring (80), z.B. eine Tellerfeder, angeordnet ist.

15. Stechkanülenanordnung nach einem der vorhergehenden Ansprüche, dadurch gekennzeichnet, dass

a) die Stechkanüle (20) mit einer Zahnstange (82) verbunden ist, die fluchtend mit dem Längskanal der Hülse (44) längsbeweglich geführt ist, und

b) die Zahnstange (82) mit einem Ritzel (98) in Eingriff ist, das von dem Stellmotor (34) antreibbar ist.

16. Stechkanülenanordnung nach Anspruch 15, dadurch gekennzeichnet, dass zur Überwachung und Steuerung des Stellmotors (34) mit dem Ritzel (98) eine Kodierscheibe (100) verbunden ist, die durch einen Abtastkopf (102) z.B. eine Lichtschranke, abtastbar ist.

17. Stechkanülenanordnung nach einem der vorhergehenden Ansprüche, dadurch gekennzeichnet, dass die Stechkanüle (20) an ihrem der Spitze (22) abgewandten Ende mit einem durch den Stellmotor (34) bewegbaren Hubglied (82) über ein Federzwischenglied (84) verbunden ist, das einen Ausgleich von Toleranzen zwischen Führung und Antrieb der Stechkanüle (20) gestattet.

**Claims**

1. Needle assembly for introducing a carrier gas into a sample vessel (118) closed by a self-sealing diaphragm, especially for a sampling device in gas chromatography operating in accordance with the head space method, comprising

a) a apparatus-fixed housing (10), which forms a chamber (12) communicating with a port (14) for a carrier gas conduit (16) adapted to be shut off and for a separating column (18),

b) needle (20) with a tip (22), which needle

b₁) is sealingly guided in the housing (10) in sealing means (36, 38, 40) for sliding movement between a position of rest and an operating position,

b₂) has a first lateral opening (24) close to the tip (22) and

b₃) a second lateral opening (26) spaced from the first lateral opening (24) and connected to the chamber (12) in the operating position of the needle (20), such that a carrier gas flow through the second opening (26) into the needle (20) and out of the first opening (24) occurs, characterized in that

c) the needle (20) is movable by a servomotor (34) between the position of rest and the operating position relative to the stationary housing (10),

d) the housing (10) has a longitudinal passage, which defines the chamber (12) and the wall of which surrounds the needle (20) leaving a narrow annular gap, said passage having a first end adjacent the tip (22) of the needle (20) and a second end remote from the tip (22),

e) the sealing means

e₁) comprise a pair of seals (36, 38) which are provided in the area of the first end of the longitudinal passage axially spaced from each other and which closely engage the needle (20), and

e₂) comprise a seal (40) provided in the area of the second end of the longitudinal passage and closely engaging the needle (20),

f) the port (14) for the carrier gas conduit (16) opens at the first end axially inwards of the seals (36, 38) and

g) the needle (20) is movable under the control of the servomotor (34)

g₁) into the position of rest in which the first lateral opening (24) at the first end is located between the pair of seals (36, 38) and

g₂) into the operating position in which the needle (20) with its tip (22) and the first lateral opening (24) at the first end extends out of the housing (10) and the second lateral opening (26) is arranged adjacent the port (14) for the carrier gas conduit (16).

2. Needle assembly as set forth in claim 1, characterized in that

h) a port (42) arranged to be connected to atmosphere is provided at the second end axially inwards of the seal (40).

3. Needle assembly as set forth in claim 1 or 2, characterized in that the needle (20) under the control of the servomotor (34)

a) is movable into a third position (stand-by position) in which the second lateral opening (26) is located between the two seals (36, 38) provided at the first end of the longitudinal passage and

b) is movable into a fourth position (venting position) in which the second lateral opening (26) is located axially outwards of the two seals (36, 38) provided at the first end of the longitudinal passage and communicating with atmosphere.

4. Needle assembly as set forth in one of the preceding claims, characterized in that the needle (20) under the control of the servomotor (34) is movable into a fifth position (back-flush position) in which the first lateral opening (24) is located axially closely outwards of the two seals (36, 38) provided at the first end of the longitudinal passage and communicating with atmosphere and the second lateral opening (26) is arranged between the two seals (36, 38) provided at the first end of the longitudinal passage, on one hand, and the seal (40) at the other end of the longitudinal passage, on the other hand, and communicates with the chamber (12).

5. Needle assembly as set forth in one of the preceding claims, characterized in that the longitudinal passage is formed by a sleeve (44).

6. Needle assembly as set forth in claim 5, characterized in that the sealing means

a) comprise a first head piece (50) of synthetic plastics which engages the end face of the first end of the sleeve (44) and has an aperture (52) aligned with the longitudinal passage of the sleeve (44) and in which the pair of seals (36, 38) provided in the area of the first end of the sleeve (44) is supported, and

b) comprise a second head piece (54) of synthetic plastics, which engages the end face of the second end of the sleeve (44) and has an aperture (56) aligned with the longitudinal passage of the sleeve (44) and in which the seal (40) provided in the area of the second end of the sleeve (44) is supported.

7. Needle assembly as set forth in claim 6, characterized in that the seals (36, 38, 40) are formed by O-rings located in annular grooves in the apertures (52, 56) of the head pieces (50, 54).

8. Needle assembly as set forth in claim 7, characterized in that the O-rings consist of fluorosilicon and are rubbed in with graphite powder to reduce the friction.

9. Needle assembly as set forth in claim 7 or 8, characterized in that

a) synthetic plastics rings (58, 60) are held in alignment with the head pieces (50, 54) and

b) the needle (20) is longitudinally movable guided in these synthetic plastics rings (58, 60).

10. Needle assembly as set forth in claim 9, characterized in that at least one of the synthetic plastics rings (58)

a) consists of chemically highly resistant synthetic plastics and

b) is arranged on the side of the associated O-rings (36, 38) facing the chamber (12).

11. Needle assembly as set forth in anyone of the claims 5 to 10, characterized in that

a) the sleeve (44) is located in a heated dosing head (46)

b) the head piece (50) at the first end of the sleeve (44) is located in a recess (62) of the dosing head (46) such that it sealingly engages the bottom of recess (62) and the end face of the sleeve (44) essentially aligned therewith and

c) the recess (62) has an internal thread (64) into which a nut (68) provided with a central aperture (66) aligned with the longitudinal passage of the sleeve (44) is screwed, which nut urges the head piece (50) against the bottom of the recess (62) and the end face of the sleeve (44).

12. Needle assembly as set forth in claim 11, characterized in that

a) the dosing head (46), laterally of the head piece (50), has a transverse slot (70) which intersects the recess (62) receiving the head piece (50) and

b) the needle (20) under the control of the servomotor (34) is movable into a position in which the tip (22) of the needle (20) is located completely within the sleeve (44) such that, after the nut (68) has been released, the head piece (50) can be removed laterally through the slot (70) or a head piece (50) can be inserted through the slot (70).

13. Needle assembly as set forth in anyone of the claims 11 or 12, characterized in that

a) an externally threaded projection (72) is provided at the dosing head (46) around the second end of the sleeve (4) and coaxial therewith.

b) a body (74) is screwed on this projection (72), said body having

$b_1$) a longitudinal passage (76) for the needle (20) and

$b_2$) an internally threaded cylindrical recess (78) with which it extends over the projection (72), the internal thread of the body (74) being screwed on the external thread of the projection (72), and

c) the head piece (54) located at the second end of the sleeve (44) is retained between the bottom of the recess (78) of this body (74) and the end faces of the sleeve (44) and of the projection (72) and is urged against the latter ones.

14. Needle assembly as set forth in claim 13, characterized in that a spring washer, for example a cup spring (80), is arranged between the bottom of the recess (78) and the head piece (54).

15. Needle assembly as set forth in anyone of the preceding claims, characterized in that

a) the needle (20) is connected to a rack (82) longitudinally movably guided in alignment with the longitudinal passage of the sleeve (44), and

b) the rack (82) meshes with a pinion (98) which is arranged to be driven by the servomotor (34).

16. Needle assembly as set forth in claim 15, characterized in that a code disc (100) which is arranged to be scanned by a pick-up head (102), for example a light barrier, is connected to the pinion (98) for monitoring and controlling the servomotor (34).

17. Needle assembly as set forth in anyone of the preceding claims, characterized in that the needle (20) is connected at its end remote from the tip (22) to a displacement member (82) movable by the servomotor (34) through an intermediate spring member (84) permitting compensation of tolerances between guide and drive means of the needle (20).

**Revendications**

1. Disposition de canule de percement destinée à introduire un gaz porteur dans un récipient d'échantillon (118) fermé par un diaphragme autoétanchéifiant, particulièrement pour un dispositif d'alimentation d'échantillon opérant selon la méthode d'espace à vapeur dans la chromatographie en phase gazeuse, comprenant

a) un boîtier (10) tenu stationnairement par rapport à l'appareil et formant une chambre (12) qui est en connexion avec un raccord (14) pour une conduite de gaz porteur (16) disposée à être fermée et pour une colonne à fractionner (18),

b) une canule de percement (20) ayant une pointe (22),

$b_1$) qui est guidée de sorte à être déplaçable dans le boîtier (10) dans des moyens d'étanchement (36, 38, 40) de manière étanchante entre une position de repos et une position d'opération, et

$b_2$) qui présente une première ouverture latérale (24) dans l'approximité de la pointe (22), et

$b_3$) une deuxième ouverture latérale (26) avec espacement de la première ouverture latérale (24), qui, dans la position d'opération de la canule de percement (20), est en connexion avec la chambre (12) de sorte qu'il y a un courant de gaz porteur par la deuxième ouverture (26) dans la canule de percement (20) et sortant de la première ouverture (24), caractérisée par le fait que

c) la canule de percement (20) est déplaçable par rapport au boîtier (10) arrêté, entre la position de repos et d'opèration par un servomoteur (34),

d) le boîtier (10) présente un canal longitudinal formant la chambre (12) et dont la paroi entoure la canule de percement (20) en laissant libre une fente annulaire étroite, le canal longitudinal ayant une première extrémité adjacente à la pointe (22) de la canule de percement (20) et une deuxième extrémité distante de la pointe (22),

e) les moyens d'étanchement présentent

$e_1$) une paire de joints (36, 38) prévus dans le domaine de la première extrémité du canal longitudinal à distance axiale, et qui sont en contact étroit avec la canule de percement (20), et

$e_2$) un joint (40) prévu dans le domaine de la deuxième extrémité du canal longitudinal, et qui est en contact étroit avec la canule de percement (20),

f) le raccord (14) pour la conduite de gaz porteur (16) aboutit à la première extrémité axialement vers le centre par rapport aux joints (36, 38), et

g) la canule de percement (20) commandée par le servomoteur (34)

$g_1$) est déplaçable dans la position de repos dans laquelle la première ouverture latérale (24) est située à la première extrémité entre la paire de joints (36, 38), et

$g_2$) est déplaçable dans la position d'opération dans laquelle la canule de percement (20), avec sa pointe (22) et la première ouverture latérale (24) à la première extrémité, saille du boîtier (10), et la deuxième ouverture latérale (26) est disposée à côté du raccord (14) pour la conduite de gaz porteur (16).

2. Disposition de canule de percement selon la revendication 1, caractérisée par le fait que

h) un raccord (42) reliable à l'atmosphère est prévu axialement vers le centre par rapport au joint (40).

3. Disposition de canule de percement selon la revendication 1 ou 2, caractérisée par le fait que la canule de percement (20) commandée par le servomoteur (34)

a) est déplaçable dans une troisième position (position d'attente) dans laquelle la deuxième ouverture latérale (26) se trouve entre les deux joints (36, 38) prévus à la première extrémité du canal longitudinal, et

b) est déplaçable dans une quatrième position (position de ventilation) dans laquelle la deuxième ouverture latérale (26) se trouve axialement vers l'extérieur par rapport aux deux joints (36, 38) prévus à la première extrémité du canal longitudinal, et est en connexion avec l'atmosphère.

4. Disposition de canule de percement selon l'une des revendications ci-dessus, caractérisée par le fait que la canule de percement (20) commandée par le servomoteur (34) est déplaçable dans une cinquième position (position de lavage à contre-courant) dans laquelle la première ouverture latérale (24) se trouve axialement étroitement vers l'extérieur par rapport aux deux joints (36, 38) prévus à la première extrémité du canal longitudinal, et est en connexion avec l'atmosphère, et la deuxième ouverture latérale (26) est disposée entre les deux joints (36, 38) prévus à la première extrémité du canal longitudinal d'un part, et le joint (40) à l'autre extrémité du canal longitudinal d'autre part, et est en connexion avec la chambre (12).

5. Disposition de canule de percement selon l'une des revendications ci-dessus, caractérisée par le fait que le canal longitudinal est formé par un manchon (44).

6. Disposition de canule de percement selon la revendication 5, caractérisée par le fait que les moyens d'étanchement comprennent

a) un première élément de tête (50) de matière artificielle qui est en contact avec le front de la première extrémité du manchon (44), qui présente un percement (52) aligné sur le canal longitudinal du manchon (44), et dans lequel est tenue la paire de joints (36, 38) prévue dans le domaine de la première extrémité du manchon (44), et

b) un deuxième élément de tête (54) de matière artificielle qui est en contact avec le front de la deuxième extrémité du manchon (44), qui présente un percement (56) aligné sur le canal longitudinal du manchon (44), et dans lequel est tenu le joint (40) prévu dans le domaine de la deuxième extrémité du manchon (44).

7. Disposition de canule de percement selon la revendication 6, caractérisée par le fait que les joints (36, 38, 40) sont formés par des anneaux toriques situés dans des rainures annulaires dans les percements (52, 56) des éléments de tête (50, 54).

8. Disposition de canule de percement selon la revendication 7, caractérisée par le fait que les anneaux toriques (36, 38, 40) sont constitués de fluorsilicone et sont enduits en poudre de graphite afin de réduire la friction.

9. Disposition de canule de percement selon la revendication 7 ou 8, caractérisée par le fait que

a) des anneaux de matière artificielle (58, 60) sont tenus dans les éléments de tête (58, 60) de sorte à être alignés sur les percements (52, 56), et

b) la canule de percement (20) est guidée de manière longitudinalement déplaçable dans ces anneaux en matière plastique (58, 60).

10. Disposition de canule de percement selon la revendication 9, caractérisée par le fait qu'au moins l'un des anneau de matière artificielle (58)

a) est constitué de matière artificielle chimiquement fortement résistante, et

b) est disposé sur le côté des anneaux toriques associés (36, 38) en face de la chambre (12).

11. Disposition de canule de percement selon l'une des revendications 5 à 10, caractérisée par le fait que

a) le manchon (44) est situé dans une tête de dosage chauffée (46),

b) l'élément de tête (50) est situé à la première extrémité du manchon (44) dans un creux (62) de la tête de dosage (46), de sorte qu'il est en contact étanchant avec le fond du creux (62) et avec le front du manchon (44) essentiellement aligné sur celui-ci, et

c) le creux (62) présente un filet femelle (64) dans lequel et vissé un écrou (68) pourvu d'un percement central (66) aligné sur le canal longitudinal du manchon (44), cet écrou pressant l'élément de tête (50) contre le fond du creux (62) et le front du manchon (44).

12. Disposition de canule de percement selon la revendication 11, caractérisée par le fait que

a) la tête de dosage (46) présente, latéralement à l'élément de tête (50), une fente transversale (70) qui entame le creux (62) recevant l'élément de tête (50), et

b) la canule de percement (20) commandée par le servomoteur (34) peut être reculée dans une position dans laquelle la pointe (22) de la canule de percement (20) se trouve complètement à l'intérieur du manchon (44) de sorte que l'élément de tête (50), après desserrage de l'écrou (68), peut être retiré latéralement par la fente (70), ou un élément de tête (50) peut être introduit par la fente (70).

13. Disposition de canule de percement selon la revendication 11 ou 12, caractérisée par le fait que

a) un talon (72) pourvu d'un filet mâle est prévu à la tête de dosage (46) autour de la deuxième extrémité du manchon (44) et coaxialement à celui-ci,

b) un corps (74) est vissé sur ce talon (72), quel corps présente

$b_1$) un canal longitudinal (76) pour la canule de percement (20), et

$b_2$) un creux (78) pourvu d'un filet femelle et avec lequel il recouvre le talon (72), le filet femelle du corps (74) étant vissé sur le filet mâle du talon (72), et

c) l'élément de tête (54) situé à la deuxième extrémité du manchon (44) est tenu entre le fond du creux (78) de ce corps (74) et les fronts du manchon (44) et du talon (72), et est pressé contre ces derniers.

14. Disposition de canule de percement selon la revendication 13, caractérisée par le fait qu'une rondelle-ressort (80), par exemple un ressort à disques, est disposée entre le fond du creux (78) et l'élément de tête (54).

15. Disposition de canule de percement selon l'une des revendications ci-dessus, caractérisée par le fait que

a) la canule de percement (20) est reliée à une crémaillère (82) guidée de sorte à être lungitudinalement déplaçable, en alignement avec le canal longitudinal du manchon (44), et

b) la crémaillère (82) est en engrenage avec un pignon (98) qui peut être commandé par le servomoteur (34).

16. Disposition de canule de percement selon la revendication 15, caractérisée par le fait que pour le contrôle et la commande du servomoteur (34) un disque de codage (100) est relié au pignon (98), ce disque de codage étant explorable par une tête d'exploration (102), par exemple un barrage photoélectrique.

17. Disposition de canule de percement selon l'une des revendications ci-dessus, caractérisée par le fait que la canule de percement (20), à son extrémité opposée à la pointe (22), est reliée à un élément de levée (82) déplaçable par le servomoteur (34) par un élément intermédiaire de ressort (84) permettant une compensation de tolérances entre guidage et commande de la canule de percement (20).

0 114 287

Fig.1

11

Fig.2

Fig. 3

Fig.4

Pos.1

Pos. 2

Pos.3

Pos. 4

Pos.5

DRUCKAUFBAU

WARTESTELLUNG

ENTLÜFTEN

RÜCKSPÜLEN

Trägergas